# NEW EUROPEAN PATENT SPECIFICATION

(11) **EP 0 954 215 B2**
(45) Date of publication and mention of the opposition decision: **28.01.2009**
(45) Mention of the grant of the patent: 07.05.2003
(21) Application number: 98940669.9
(22) Date of filing: 14.08.1998
(51) Int. Cl.: A01D 67/00, A01D 43/10

(54) **AN AGRICULTURAL MACHINE AND A METHOD OF USING SAME**
LANDWIRTSCHAFTLICHE MASCHINE UND VERFAHREN ZU DESSEN VERWENDUNG
MACHINE AGRICOLE ET SON PROCEDE D'UTILISATION

(30) Priority: 22.08.1997 NL 1006826
(43) Date of publication of application: 10.11.1999
(73) Proprietor: MAASLAND N.V., 3155 PD Maasland (NL)
(72) Inventor: VAN DER LELY, Olaf, CH-6300 Zug (CH); VAN DER LELY, Alexander, NL-3065 NA Rotterdam (NL); KOORN, Maarten, NL-3123 CP Schiedam (NL)
(74) Representative: Corten, Maurice Jean F.M.
(86) International application number: PCT/NL1998/000465
(87) International publication number: WO 1999/009805

(56) References cited:
- EP-A- 0 149 870
- EP-A- 0 552 120
- EP-A- 0 679 327
- EP-A- 0 682 859
- EP-A- 0 741 960
- EP-A- 0 741 960
- WO-A-90/12492
- WO-A-98/04112
- WO-A2-98/04112
- DE-A- 19 632 868
- NL-A- 8 700 863
- NL-C- 1 001 586
- US-A- 4 015 366

## Description

The invention relates to a method of using an agricultural machine, such as a mowing implement.

A known agricultural machine is a so-called drawn mowing implement provided with a resilient supporting beam suspended in a mobile main frame and extending substantially horizontally and perpendicular to the direction of travel, on which supporting beam there is disposed a row of knives which are arranged in side by side relationship and which are rotatable in opposite directions about upwardly orientated respective shafts. Via said supporting beam part of the weight of that row rests on the ground. Prior to mowing, the ground pressure of the supporting beam can be adjusted at a predetermined ground pressure by means of a manually controlled multiple adjustment. In this manner the operation of the agricultural machine can be adapted to the soil conditions. The multiple adjustment cannot be operated from the tractor.

EP A 0149870 discloses an agricultural machine which is able to permanently measure and adapt the ground pressure.

The invention aims at providing an improved machine in accordance with the features of claim 1 and an improved method in accordance with the features of claim 16. In this manner it is possible to adapt the agricultural machine during mowing e.g. to the changes in the soil conditions. This will result in an improved mowing process; it will be possible to move the agricultural machine at a higher speed; the agricultural machine will be less subject to wear or damage and there will be inflicted e.g. less harm to the soil or the crop.

The invention is based on the insight that the soil conditions are not equal in every place of a parcel, so that presetting only once of e.g. the ground pressure of the agricultural machine prior to mowing a parcel does not give an optimal result.

With a soft ground e.g. a too great ground pressure is disadvantageous, because in that case the supporting beam threatens to sink in the ground and to damage the roots of the crop, while in the situation of a hard ground e.g. a too small ground pressure results in that the subframe will bounce so that the mowing process will be irregular. Also in the situation of a bumpy ground a greater ground pressure will be favourable. By means of the invention it will be possible continuously to adjust an optimum during mowing for the purpose of mowing at a minimal ground pressure and at a minimal bouncing movement.

In what follows the invention is explained in further detail on the basis of non-restricting exemplary embodiments and with reference to the accompanying drawings, in which:
Figure 1 is a plan view of a first embodiment of the invention;
Figure 2 is a side view of part of a drawn mower according to the invention;
Figure 3 is a front view of the part of the implement shown in Figure 2, partially showing the interior thereof, and
Figure 4 is a plan view of a second embodiment of the invention.

In the figures, showing the embodiment schematically, corresponding parts are indicated by the same reference numerals.

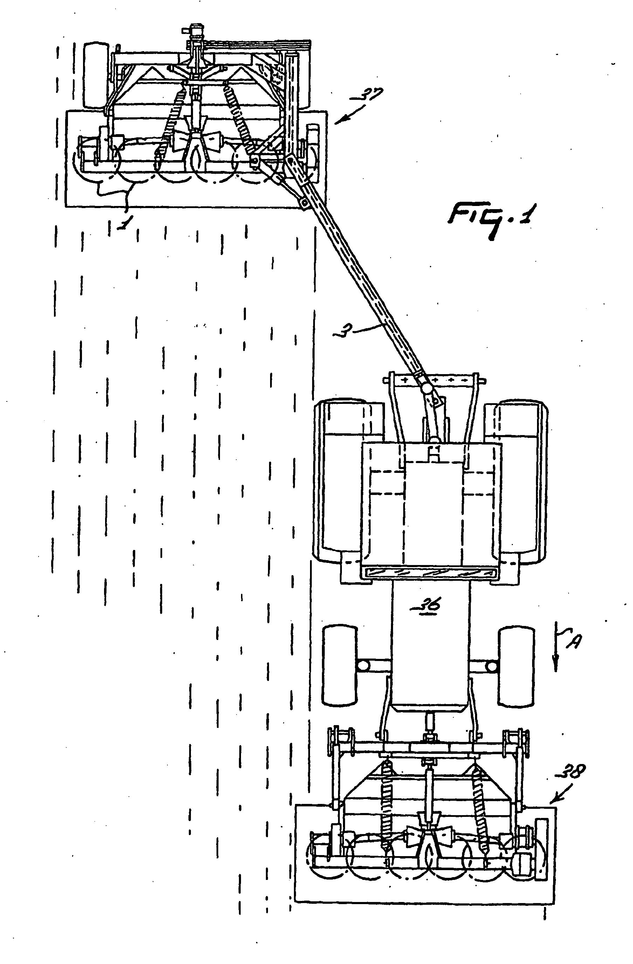

Figure 1 shows a tractor 36 with a drawn mower 37 and a front mower 38 suspended from the tractor. In what follows the invention is set out in further detail on the basis of a drawn mower, although the principles of the invention are also applicable to e.g. the front mower.

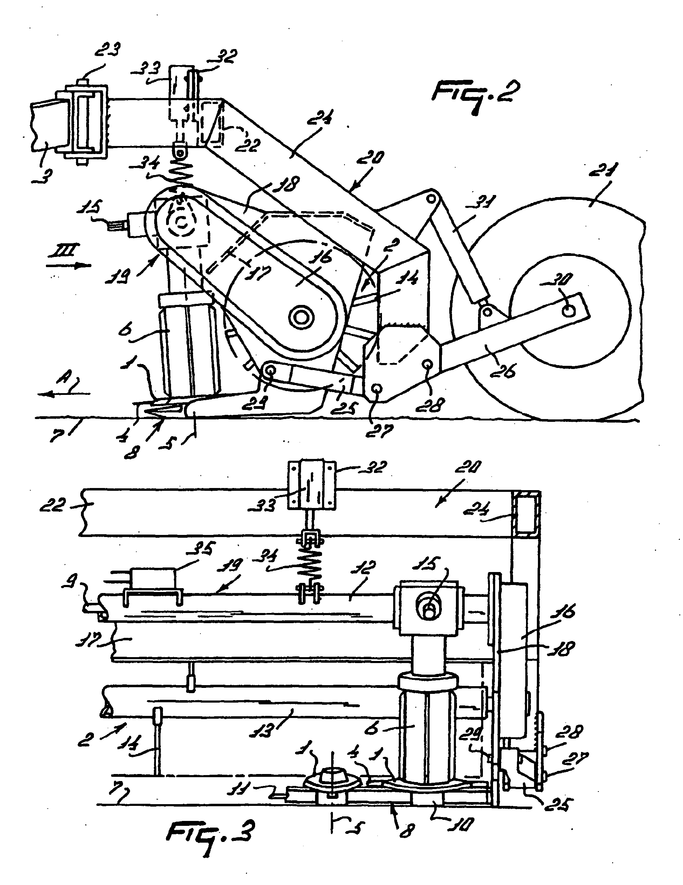

Figure 2 shows schematically a combined mower-crusher implement with mowing members 1 and the rotor 2 of the crusher. The fastening arm 3, by means of which the drawn implement can be connected to a tractor, is only partially shown. The agricultural machine may also be designed without a crusher.

There are shown a number of mowing members 1 arranged in side by side relationship and extending at least substantially horizontally and perpendicular to the direction of travel (arrow A), which mowing members are all provided with two knives 4. The juxtaposed mowing members 1 rotate each time in opposite directions about respective upwardly orientated shafts 5, the knives 4 following a path overlapping that of the mowing members 1 located immediately next thereto. Each shaft 5 inclines forward somewhat in the direction of travel (arrow A), as shown in particular in Figure 2. The outer mowing member 1 located on either side of the agricultural machine is provided with a crop guide member 6 which rotates together with said mowing member.

As shown in particular in Figure 2, the mowing members 1 are disposed above a supporting beam 8 which, in the shown operative position of the agricultural machine, rests on the ground and extends at least substantially horizontally and perpendicular to the direction of travel (arrow A). Under each mowing member 1 the supporting beam 8 is provided with a guide shoe 10 which is partially circular at the front side. Inside the supporting beam 8 there are drive means for driving the mowing members 1 in rotation, which drive means comprise e.g. a drive rod 11 (see Figure 3) extending through the supporting beam in longitudinal direction.

In this embodiment the drive rod 11 is driven near its two ends by a (non-visible) shaft, which is co-axial to the respective shaft 5 and extends through the crop guide member, which (non-visible) shaft is driven itself by a shaft 9 passing through the frame beam 12 extending at least substantially parallel to the supporting beam 8 and at some distance above the mowing members, which shaft 9 is driven itself by the shaft 15 to be connected to the power take-off shaft of the tractor. Alternatively it is possible for the drive rod 11 to be driven only at one end.

The crusher device 2 comprises a cylindrical shaft 13 rotatable about its axis and extending between the supporting beam 8 and the frame beam 12 at least substantially parallel to these beams 8 and 12, on which shaft 13 projecting crushing pins 14 are disposed. The cylindrical shaft 13 is driven in rotation near one of its two ends by the shaft 9 by means of a (non-visible) transmission included in a gear box 16, which transmission is arranged at the respective side of the agricultural machine and which transmission may be constituted by a chain running over a gear wheel disposed on the respective shaft 9 and the cylindrical shaft 13. The crusher device is partially surrounded by a cap 17 extending at least substantially parallel to the cylindrical shaft 13.

By means of a plate element 18 on either side of the agricultural machine the supporting beam 8 and the frame beam 12 are joined together to form a subframe 19 retaining at least substantially its shape. This subframe 19 is fastened to a carrier frame 20 which is capable of being moved over the ground 7 by means of a wheel 21 on either side of the agricultural machine and which is supported at one side by these wheels 21 and at the other side by the fastening arm 3 coupled to the tractor. The carrier frame 20 retains at least substantially its shape and comprises a frame beam 22 extending at least substantially parallel to the frame beam 12, to which frame beam 22 the fastening arm 3 is pivotably fastened about an upwardly orientated shaft 23. On either side of the agricultural machine there is provided a respective frame arm 24 which is rigidly secured to the frame beam 22 and which extends obliquely rearwards and downwards relative to the direction of travel (arrow A). At the other free end of this frame arm 24 a respective end of arms 25, 26 respectively is freely pivotably disposed about pivot shafts 27, 28 respectively extending substantially horizontally and parallel to the frame beam 22. In the shown operative position of the agricultural machine, the arm 25 extends substantially horizontally, while its other end is fastened, freely pivotably about a pivot shaft 29 extending at least substantially parallel to the pivot shaft 27, to the plate element 18 of the subframe 19 and ensures in this manner that the subframe is adjustable at least substantially only in height. With its other end the arm 26 is fitted to the hub of the wheel 21 so as to be freely pivotable about the wheel axle 30. The position of the arm 26 relative to the ground 7 is adjustable by means of the adjusting element 31, in this embodiment constituted by a hydraulic cylinder, which is fastened with one end to the arm 26 and with its other end to the frame arm 24. The adjusting element may be designed so as to be capable of being operated from the tractor and may serve to bring the agricultural machine from the shown operative position into the transport position in which the supporting beam 8, e.g. during transport by public road is lifted with sufficient clearance from the ground 7.

The vertical support between the subframe 19 and the carrier frame 20 is designed as an adjustable one; in this embodiment there are disposed for that purpose two adjustable fastening members 32 with mutual interspace. Although different alternatives are possible, in this embodiment each fastening member 32 consists of an adjusting element 33, such as a hydraulic cylinder, which is rigidly fastened to the frame beam 22, and a spring element of which one end is rigidly secured to the adjusting element 33 while the other end is rigidly secured to the frame beam 12, the spring element being constituted in this situation by a helical tension spring 34. Preferably the spring element has a spring constant which is approximately constant over a considerable part of the difference in length which the spring element undergoes during operation. As an alternative, a progressive spring constant may be applied as well. Instead of a helical tension spring, there may also be applied another type of spring, such as an air spring. Because of its simplicity and sturdiness a helical tension spring is preferred.

By extending the adjusting element 33 to a greater or a lesser extent, the weight distribution of the subframe 9 over the supporting beam 8 and the carrier frame 20 can be controlled, so that the supporting beam presses to a greater or a lesser extent on the ground 7. The spring element ensures that the supporting beam is capable of following e.g. unevennesses of the ground 7. Adjustment of the adjusting element preferably takes place automatically when the agricultural machine is moved forward, so that the pressure at which the subframe 19 rests on by the ground 7 via the supporting beam 8 is adapted to changing conditions. For that purpose, in this embodiment a sensor 35 is fastened to the subframe 19, in this situation to the frame beam 12. The sensor 35 belongs to a recording system and is used for detecting vibrations of the subframe 19 during mowing, for determining on the basis thereof whether adjustment of the ground pressure for the subframe 19 is necessary. For that purpose, in this embodiment the sensor 35 is an acceleration meter. This acceleration meter supplies a signal to a calculation device or an evaluation device comparing this signal, or a signal derived or converted therefrom, e.g. with a reference value and in case of a deviation therefrom, whilst observing possibly a predetermined threshold value, activates the control device for the adjusting element, for the purpose of adapting the ground pressure in the desired manner. The signal emanating from the acceleration meter is e.g. filtered, to which end there is provided a signal filtering device for e.g. filtering out slower motions due to following unevennesses of the ground hardly influencing, if at all, the mowing process. Instead of or in addition to the acceleration meter 35, e.g. a strain gauge may be used as sensor, which strain gauge detects deformations in a portion of the subframe 19, which deformations are generated e.g. by a bouncing movement of the subframe 19. An other alternative to the acceleration meter is e.g. a sound recording microphone with the aid of which an identifiable sound pattern which is characteristic for a too great or too small ground pressure can be recorded. In accordance with the invention there is provided a ground identification system, such as a picture identification system, e.g. a video camera, which ground identification system determines the type of soil (e.g. soft or hard or marshy or dry) and on the basis of which the ground pressure is adapted during mowing.

Instead of fitting the sensor 35 to the subframe, said sensor may also be disposed elsewhere, e.g. more in front of the subframe 19 relative to the direction of travel, e.g. on the fastening arm 3, so that changing conditions can be anticipated. In front of the subframe 19 there may also be used an auxiliary element which rests on the ground and whose behaviour is measured, while on the basis of this measurement the ground pressure of the subframe 19 is adapted.

As an alternative to or in addition to the fully automatic system there may be arranged, e.g. in the driver's cabin of the tractor, an electronic unit, e.g. a keyboard, on which the driver, during mowing, can input a desired ground pressure, e.g. when he notices that the ground structure changes, or when he receives a relevant signal from the signalling device. The electronic unit may be combined with an indicating device for indicating the adjusted ground pressure or a position representing same. For example, in the situation of a combination of automatic and manual operation, the driver may optionally switch between these two positions.

As an alternative to the adjusting element 33 the adjusting element 31 may also be used for adjusting the ground pressure during mowing. In this situation, of course, the spring element 34 is fastened directly to the frame beam 22. The adjusting element will be activated by the control device on the basis of e.g. the signal emanating from the sensor 35. The adjusting element 33 may also be provided between the arm 25 and the frame arm 24.

As an alternative to the mowing members 1 it is e.g. possible to apply the invention to a so-called cage mower which, e.g. by means of a supporting roller beside the mowing cage, rests at least partially on the ground.

The agricultural machine furthermore comprises a monitoring system for the number of revolutions of the mowing members 1. For that purpose each guide shoe 10 is provided with a (non-visible) light-sensitive element, such as a diode, signalizing the passage of a knife 4. In an evaluation device the number of revolutions can be deduced from the registered passages. The evaluation device may e.g. be coupled to an indicating or warning device. The number of revolutions may e.g. also be measured on the basis of the number of revolutions of the drive shaft 9 or that of the drive shaft passing through the crop guide member 6.

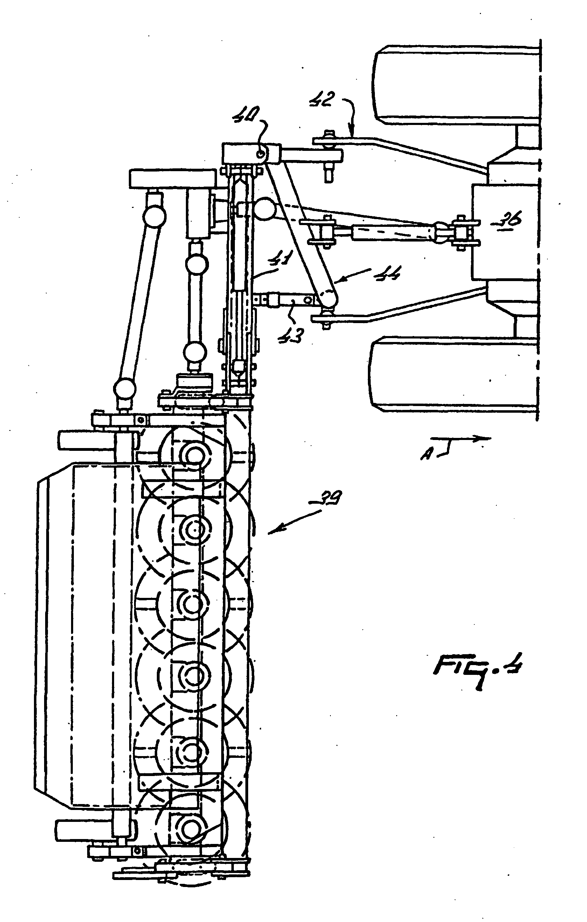

The mower 39 shown in Figure 4 is a so-called trailed mower. The most significant difference from the drawn mowers shown in Figures 1 to 3 is the suspension of the mower 39 by the intermediary of a coupling trestle 44 to the three-point trestle 42 of the tractor 36. The mower 39 comprises an upwardly orientated pivot shaft 40. A supporting arm 41 extends between this pivot shaft 40 and the mower 39. Spaced apart from the pivot shaft 40, a deflection mechanism 43 extends between the three-point trestle 42 and the supporting arm 41. Said deflection mechanism 43 comprises in a manner known per se two coupling arms located above each other and slidable under spring action, one of which being pivotably connected to the supporting arm 41 and the other one being fastened to the coupling trestle 44. In the situation of a too great torque on the deflection mechanism, e.g. due to the fact that the mower meets with an obstacle, the coupling arms move away from each other, thus enabling the mower to pivot away. At a growing friction between the mower 39 (in particular the guide shoes 10; see Figure 2) and the ground, the force exerted on the deflection mechanism 43 will increase while generating a transformation therein. This transformation or movement of the two coupling arms relative to each other is determined by a (non-shown) sensor of a security system and is a measure for the ground resistance. At a too great resistance the mower 39 will pivot about the pivot shaft 40. The resistance having been found too great, an adjustment may be carried out e.g. by decreasing the ground pressure or by reducing the driving speed. In Figure 2 it is also possible to measure the resistance at the coupling trestle 44 with the aid of a strain gauge fitted thereto.

## Claims

1. An agricultural machine, such as a mowing implement, comprising one ormore mowing members (1) for mowing crop, **characterized in that** the agricultural machine comprises means for determining the soil conditions, the agricultural machine being provided with a subframe (19) and a carrier frame (20) partially carrying the subframe, the latter comprising the mowing members, while the behaviour of the subframe can be forecast by means of a recording system belonging to the means, the recording system comprising sensor means (35) formed by a ground identification system, such as a picture identification system, e.g. a video camera, which ground identification system determines the type of soil.

2. An agricultural machine as claimed in claim 1, **characterized in that** there are provided filtering means for filtering out undesired signals supplied by the sensor means.

3. An agricultural machine as claimed in any one of the preceding claims, **characterized in that** the sensor means are at least partially provided on the subframe.

4. An agricultural machine as claimed in any one of the preceding claims, **characterized in that** the agricultural machine comprises a security system for determining at least the horizontal friction between at least part of the agricultural machine and the ground and/or the crop.

5. An agricultural machine as claimed in claim 4, **characterized in that** the security system comprises means which are sensitive to movement between two parts of the agricultural machine.

6. An agricultural machine as claimed in claim 5, **characterized in that** at least one of these two parts belongs to a break-back device of the agricultural machine.

7. An agricultural machine as claimed in any one of the preceding claims, **characterized in that** the agricultural machine comprises a supporting member (8) by means of which at least part of the weight of the agricultural machine can rest on the ground during mowing,

8. An agricultural machine as claimed in claim 7, **characterized in that** the agricultural machine comprises ground pressure adjusting means with the aid of which the degree of supporting via the supporting member can be adjusted.

9. An agricultural machine as claimed in claim 8, **characterized in that** the ground pressure adjusting means comprise at least one adjustable fastening member (32) between the subframe and the carrier frame.

10. An agriculture machine as claimed in claim 7 or 8, **characterized in that** the agricultural machine comprises control means which are connected to the security system and/or the recording system, in a manner in which they receive signals therefrom, and are suitable for controlling the ground pressure adjusting means on the basis of the security system or the recording system.

11. An agricultural machine as claimed in claim 8, 9 or 10, **characterized in that** the agricultural machine comprises an inputting device for controlling manually, but preferably automatically, a desired adjustment of the ground pressure adjustment means while the agricultural machine is moved forward.

12. An agricultural machine as claimed in any one of the preceding claims, **characterized in that** the agricultural machine comprises a monitoring system for determining the number of revolutions of one or more mowing members.

13. An agricultural machine as claimed in claim 12, **characterized in that** the monitoring system comprises measuring means for recording the passage of a knife of a mowing member.

14. An agricultural machine as claimed in claim 12 or 13, **characterized in that** the agricultural machine comprises control means which are connected to the monitoring system, in a manner in which they receive signals therefrom, which control means are capable of adjusting the number of revolutions on the basis of signals emanating from the monitoring system.

15. An agricultural machine as claimed in any one of the preceding claims, **characterized in that** the recording system or the security system or the monitoring system comprises indicating means.

16. A method of using an agricultural machine provided with one or more mowing members for mowing crop, **characterized in that**, during mowing, the soil conditions in front of the agricultural machine are determined continuously or at intervals.

17. A method as claimed in claim 16, **characterized in that** the agricultural machine rests at least partially on the ground by means of a supporting member, and the degree of supporting by the supporting member is adjusted depending on the determination.

18. A method as claimed in any one of claims 16 and 17, **characterized in that** the determination is compared with a reference value and, in case of a deviation therefrom, whilst observing possibly a predetermined threshold value, there is taken a measure for reducing the deviation.

## Patentansprüche

1. Landwirtschaftliche Maschine, wie z. B. Mähmaschine, mit einem oder mehreren Mähgliedern (1) zum Mähen von Gut,
**dadurch gekennzeichnet, daß** die landwirtschaftliche Maschine Vorrichtungen zur Ermittlung der Bodenbeschaffenheit umfaßt, wobei die landwirtschaftliche Maschine mit einem Untergestell (19) und einem Traggestell (20) versehen ist, das das Untergestell teilweise trägt, wobei letzteres die Mähglieder umfaßt, wobei das Verhalten des Untergestells mit Hilfe eines zu den Vorrichtungen gehörenden Aufzeichnungssystems vorausberechnet werden kann, wobei das Aufzeichnungssystem eine Sensorvorrichtung (35) umfaßt, die durch ein Bodenerkennungssystem, wie z. B. ein Bilderkennungssystem, beispielsweise eine Videokamera, gebildet ist, wobei das Bodenerkennungssystem den Bodentyp ermittelt.

2. Landwirtschaftliche Maschine nach Anspruch 1,
**dadurch gekennzeichnet, daß** Filtervorrichtungen vorhanden sind, um von der Sensorvorrichtung gelieferte, unerwünschte Signale herauszufiltern.

3. Landwirtschaftliche Maschine nach einem der vorhergehenden Ansprüche,
**dadurch gekennzeichnet, daß** die Sensorvorrichtung zumindest teilweise an dem Untergestell angeordnet ist.

4. Landwirtschaftliche Maschine nach einem der vorhergehenden Ansprüche,
**dadurch gekennzeichnet, daß** die landwirtschaftliche Maschine ein Sicherheitssystem umfaßt, um zumindest die horizontale Reibung zwischen mindestens einem Teil der landwirtschaftlichen Maschine und dem Boden und/oder dem Erntegut zu ermitteln.

5. Landwirtschaftliche Maschine nach Anspruch 4,
**dadurch gekennzeichnet, daß** das Sicherheitssystem Vorrichtungen umfaßt, die auf eine Bewegung zwischen zwei Teilen der landwirtschaftlichen Maschine ansprechen.

6. Landwirtschaftliche Maschine nach Anspruch 5,
**dadurch gekennzeichnet, daß** mindestens einer dieser beiden Teile zu einer Rücksprungvorrichtung der landwirtschaftlichen Maschine gehört.

7. Landwirtschaftliche Maschine nach einem der vorhergehenden Ansprüche,
**dadurch gekennzeichnet, daß** die landwirtschaftliche Maschine ein Stützglied (8) umfaßt, mittels dessen sich die landwirtschaftliche Maschine während des Mähens zumindest mit einem Teil ihres Gewichts auf dem Boden abstützen kann.

8. Landwirtschaftliche Maschine nach Anspruch 7,
**dadurch gekennzeichnet, daß** die landwirtschaftliche Maschine eine Bodendruck-Einstellvorrichtung umfaßt, mit deren Hilfe der Grad der Abstützung durch das Stützglied eingestellt werden kann.

9. Landwirtschaftliche Maschine nach Anspruch 8,
**dadurch gekennzeichnet, daß** die Bodendruck-Einstellvorrichtung mindestens ein einstellbares Befestigungsglied (32) zwischen dem Untergestell und dem Traggestell umfaßt.

10. Landwirtschaftliche Maschine nach Anspruch 7 oder 8,
**dadurch gekennzeichnet, daß** die landwirtschaftliche Maschine Steuervorrichtungen umfaßt, die mit dem Sicherheitssystem und/oder dem Aufzeichnungssystem derart verbunden sind, daß sie von diesen Signale empfangen, und die dazu ausgebildet sind, die Bodendruck-Einstellvorrichtung auf der Basis des Sicherheitssystems oder des Aufzeichnungssystems zu steuern.

11. Landwirtschaftliche Maschine nach Anspruch 8, 9 oder 10,
**dadurch gekennzeichnet, daß** die landwirtschaftliche Maschine eine Eingabevorrichtung umfaßt, um eine gewünschte Einstellung der Bodendruck-Einstellvorrichtung manuell, jedoch vorzugsweise automatisch zu steuern, während die landwirtschaftliche Maschine vorwärtsbewegt wird.

12. Landwirtschaftliche Maschine nach einem der vorhergehenden Ansprüche,
**dadurch gekennzeichnet, daß** die landwirtschaftliche Maschine ein Überwachungssystem umfaßt, um die Drehzahl eines oder mehrerer Mähglieder zu ermitteln.

13. Landwirtschaftliche Maschine nach Anspruch 12,
**dadurch gekennzeichnet, daß** das Überwachungssystem eine Meßvorrichtung umfaßt, um den Durchgang eines Messers eines Mähgliedes aufzuzeichnen.

14. Landwirtschaftliche Maschine nach Anspruch 12 oder 13,
**dadurch gekennzeichnet, daß** die landwirtschaftliche Maschine Steuervorrichtungen umfaßt, die mit dem Überwachungssystem derart verbunden sind, daß sie von diesem Signale empfangen, wobei die Steuervorrichtungen geeignet sind, auf der Basis von Signalen des Überwachungssystems die Drehzahl einzustellen.

15. Landwirtschaftliche Maschine nach einem der vorhergehenden Ansprüche,
**dadurch gekennzeichnet, daß** das Aufzeichnungssystem oder das Sicherheitssystem oder das Überwachungssystem eine Anzeigevorrichtung umfaßt.

16. Verfahren zur Verwendung einer landwirtschaftlichen Maschine mit einem oder mehreren Mähgliedern zum Mähen von Gut,
**dadurch gekennzeichnet, daß** während des Mähens die Bodenbeschaffenheit vor der landwirtschaftlichen Maschine kontinuierlich oder intervallmäßig ermittelt wird.

17. Verfahren nach Anspruch 16,
**dadurch gekennzeichnet, daß** die landwirtschaftliche Maschine zumindest teilweise mittels eines Stützgliedes auf dem Boden abgestützt ist und der Grad der Abstützung durch das Stützglied in Abhängigkeit von dem Ermittlungsergebnis eingestellt wird.

18. Verfahren nach einem der Ansprüche 16 und 17,
**dadurch gekennzeichnet, daß** das Ermittlungsergebnis mit einem Referenzwert verglichen wird und im Falle einer Abweichung von diesem eine Maßnahme zur Reduzierung der Abweichung ergriffen wird, wobei möglicherweise ein vorgegebener Grenzwert eingehalten wird.

## Revendications

1. Machine agricole, telle qu'un outil de fauchage, comprenant un ou plusieurs éléments de fauchage (1) destinés à faucher la récolte, **caractérisée en ce que** la machine agricole comprend des moyens destinés à déterminer les conditions du sol, la machine agricole étant pourvue d'un sous-châssis (19) et un cadre porteur (20) supportant partiellement le sous-châssis, ce dernier comprenant les éléments de fauchage, alors que le comportement du sous-châssis peut être prévu au moyen d'un système d'enregistrement appartenant aux moyens, le système d'enregistrement comprenant des moyens formant capteur (35) formés par un système d'identification de sol, tel qu'un système d'identification d'image, par exemple une caméra vidéo, lequel système d'identification de sol détermine le type de sol.

2. Machine agricole selon la revendication 1, **caractérisée en ce qu'**il est fourni des moyens de filtrage destinés à filtrer des signaux non souhaités fournis par les moyens formant capteur.

3. Machine agricole selon l'une quelconque des revendications précédentes, **caractérisée en ce que** les moyens formant capteur sont au moins partiellement prévus sur le sous-châssis.

4. Machine agricole selon l'une quelconque des revendications précédentes, **caractérisée en ce que** la machine agricole comprend un système de sécurité pour déterminer au moins le frottement horizontal entre au moins une partie de la machine agricole et le sol et/ou la récolte.

5. Machine agricole selon la revendication 4, **caractérisée en ce que** le système de sécurité comprend des moyens qui sont sensibles au mouvement entre deux parties de la machine agricole.

6. Machine agricole selon la revendication 5, **caractérisée en ce qu'**au moins l'une de ces deux parties appartient à un dispositif de sécurité de la machine agricole.

7. Machine agricole selon l'une quelconque des revendications précédentes, **caractérisée en ce que** la machine comprend un élément de support (8) au moyen duquel au moins une partie du poids de la machine agricole peut reposer sur le sol pendant le fauchage.

8. Machine agricole selon la revendication 7, **caractérisée en ce que** la machine agricole comprend des moyens de réglage de pression au sol à l'aide desquels le degré de support par le biais de l'élément de support peut être ajusté.

9. Machine agricole selon la revendication 8, **caractérisée en ce que** les moyens de réglage de pression au sol comprennent au moins un élément de fixation réglable (32) entre le sous-châssis et le cadre porteur.

10. Machine agricole selon la revendication 7 ou 8, **caractérisée en ce que** la machine agricole comprend des moyens de commande qui sont raccordés au système de sécurité et/ou au système d'enregistrement, de manière qu'ils reçoivent des signaux de ceux-ci, et sont adaptés pour commander les moyens de réglage de pression au sol en fonction du système de sécurité ou du système d'enregistrement.

11. Machine agricole selon la revendication 8, 9 ou 10, **caractérisée en ce que** la machine agricole comprend un dispositif d'entrée pour commander manuellement, mais de préférence automatiquement, un réglage souhaité des moyens de réglage de pression au sol alors que la machine agricole est déplacée vers l'avant.

12. Machine agricole selon l'une quelconque des revendications précédentes, **caractérisée en ce que** la machine agricole comprend un système de contrôle pour déterminer le nombre de révolutions d'un ou plusieurs éléments de fauchage.

13. Machine agricole selon la revendication 12, **caractérisée en ce que** le système de contrôle comprend des moyens de mesure pour enregistrer le passage d'un couteau d'un élément de fauchage.

14. Machine agricole selon la revendication 12 ou 13, **caractérisée en ce que** la machine agricole comprend des moyens de commande qui sont raccordés au système de contrôle, de manière qu'ils reçoivent des signaux de celui-ci, lesquels moyens de commande sont capables d'ajuster le nombre de révolutions en fonctions des signaux provenant du système de contrôle.

15. Machine agricole selon l'une quelconque des revendications précédentes, **caractérisée en ce que** le système d'enregistrement ou le système de sécurité ou le système de contrôle comprend des moyens formant indicateur.

16. Procédé d'utilisation d'une machine agricole pourvue d'un ou plusieurs éléments de fauchage destinés à faucher une récolte, **caractérisé en ce que**, pendant le fauchage, les conditions de sol devant la machine agricole sont déterminées en continu ou par intervalles.

17. Procédé selon la revendication 16, **caractérisé en ce que** la machine agricole repose au moins partiellement sur le sol au moyen d'un élément de support et le degré de support par l'élément de support est ajusté en fonction de la détermination.

18. Procédé selon l'une quelconque des revendications 16 et 17, **caractérisé en ce que** la détermination est comparée à une valeur de référence et en cas de déviation par rapport à celle-ci, tout en respectant éventuellement une valeur seuil prédéterminée, il est pris une mesure pour réduire la déviation.
